# FASCICULE DE BREVET EUROPEEN

(11) **EP 3 181 652 B1**
(45) Date de publication et mention de la délivrance du brevet: **27.02.2019**
(21) Numéro de dépôt: 15201237.3
(22) Date de dépôt: 18.12.2015
(51) Int. Cl.: C09J 201/02, C09J 153/00

(54) **PROCÉDÉ D'ASSEMBLAGE ET DE REPOSITIONNEMENT DE PIÈCES HORLOGÈRES EN UTILISANT UN ADHÉSIF REPOSITIONNABLE À CHAUD**
VERFAHREN ZUM ZUSAMMENFÜGEN UND REPOSITIONIEREN UHRENTEILEN MIT EINEM REPOSITIONIERBAREN HEISSSCHMELZKLEBER
METHOD FOR ASSEMBLING AND REPOSITIONING TWO CLOCKMAKING PARTS BY A HOT-REPOSITIONABLE ADHESIVE

(43) Date de publication de la demande: 21.06.2017
(73) Titulaire: The Swatch Group Research and Development Ltd., 2074 Marin (CH)
(72) Inventeur: Rannoux, Claire, 1003 Lausanne (CH); Fernandez Ciurleo, Maria, 2114 Fleurier (CH)
(74) Mandataire: ICB SA

(56) Documents cités:
- WO-A2-2010/144774
- WO-A2-2011/112447
- US-A- 5 726 391
- US-A1- 2012 309 895
- MARKUS J BARTHEL ET AL: "Self-Healing Materials via Reversible Crosslinking of Poly(ethylene oxide)-Block-Poly(furfuryl glycidyl ether) (PEO-b-PFGE) Block Copolymer Films", ADVANCED FUNCTIONAL MATERIALS, WILEY - V C H VERLAG GMBH & CO. KGAA, DE, vol. 23, no. 39, 18 octobre 2013 (2013-10-18), pages 4921-4932, XP001586853, ISSN: 1616-301X, DOI: 10.1002/ADFM.201300469 [extrait le 2013-04-19]
- JING BAI ET AL: "Dynamic crosslinked poly(styrene-block-butadiene-block-styrene ) via Diels-Alder chemistry: an ideal method to improve solvent resistance and mechanical properties without losing its thermal plastic behavior", RSC ADVANCES: AN INTERNATIONAL JOURNAL TO FURTHER THE CHEMICAL SCIENCES, vol. 5, no. 56, 1 janvier 2015 (2015-01-01), pages 45376-45383, XP055276409, GB ISSN: 2046-2069, DOI: 10.1039/C5RA08719H & JING BAI ET AL: "Dynamic crosslinked poly(styrene-block-butadiene-block-styrene ) via Diels-Alder chemistry: an ideal method to improve solvent resistance and mechanical properties without losing its thermal plastic behavior", RSC ADVANCES: AN INTERNATIONAL JOURNAL TO FURTHER THE CHEMICAL SCIENCES, vol. 5, no. 56, 1 janvier 2015 (2015-01-01), pages 45376-45383, XP055276411, GB ISSN: 2046-2069, DOI: 10.1039/C5RA08719H

## Description

### Domaine de l'invention

La présente invention concerne un adhésif repositionnable à chaud agencé pour assembler deux pièces entre elles et pour permettre un repositionnement des pièces lorsque ledit adhésif est chauffé. Elle concerne également un procédé d'assemblage et de repositionnement de telles pièces.

### Arrière-plan de l'invention

Dans le domaine de l'horlogerie, des pièces horlogères sont assemblées entre elles au moyen d'une colle ou d'un adhésif. Les points de collage doivent être réalisés au moyen d'un adhésif repositionnable à chaud pour pouvoir être retravaillés à chaud par une opération manuelle et repositionner les pièces collées de manière optimale, soit lors du montage, soit lors de l'entretien ou de la réparation des pièces en service après-vente. De plus, cet adhésif doit également présenter une résistance aux lavages chimiques, notamment afin de résister aux lavages horlogers effectués lors du service après-vente.

A titre d'exemple, les palettes en rubis sont fixées sur l'ancre par collage, généralement au moyen d'une gomme-laque. La gomme-laque est une résine naturelle, qui est thermofusible, c'est-à-dire qu'elle est mielleuse à des températures supérieures à sa température de fusion (Tf) et solide en dessous de sa température de fusion (Tf) ou de sa température de transition vitreuse (Tg). Ainsi, la gomme-laque peut être ramollie à chaud par un opérateur de manière à pouvoir déplacer de quelques microns les palettes sur l'ancre. Toutefois, comme tout composé thermo-fusible, la gomme-laque est soluble dans les solvants. Les pièces assemblées par gomme-laque présentent donc une mauvaise résistance aux lavages horlogers.

Un autre exemple concerne le spiral collé sur son piton au moyen de colles thermodurcissables, type résine Epikote™. Les colles thermodurcissables présentent une bonne résistance chimique. Toutefois, elles ne peuvent pas être retravaillées à chaud de sorte que les pièces assemblées par les colles thermodurcissables ne peuvent pas être séparées et repositionnées si cela s'avère nécessaire.

L'article "Self-Healing Materials via Reversible Crosslinking of Poly(ethylene oxide)-Block-Poly(furfuryl glycidyl ether) (PEO-b-PFGE) Block Copolymer Films", Barthel, M.J., et al., Advanced Functional Materials, vol. 23, no. 39, publié le 18 Octobre 2013, pages 4921-4932, décrit des compositions comprenant un mélange de polymères à bloc présentant des blocs à base d'oxyde de polyéthylène ayant une température de fusion de 59 °C et des blocs comprenant des unités pendantes furfuryliques ayant une température de transition vitreuse de -40 °C, ce mélange comprenant aussi des molécules de couplage comprenant deux groupes à base de maléimide. Les groupements furfuryliques se lient avec les unités de maléimide par réaction de Diels-Alder à une température de 65 °C et elles se régénèrent par réaction de rétro-Diels-Alder à une température de 155 °C.

L'article "Dynamic crosslinked poly(styrene-block-butadiene-block-styrene) via Diels-Alder chemistry: an ideal method to improve solvent resistance and mechanical properties without losing its thermal plastic behavior", Jing Bai et al., RSC Advances , vol. 5, no. 56, 1 Janvier 2015, pages 45376-45383, décrit un mélange comprenant des polymères à bloc et des molécules de couplage comprenant deux groupes à base de maléimide, ces polymères à bloc présentant des blocs à base de polystyrène à chacune des extrémités et ayant une température de transition vitreuse entre 85,4 °C et 94,2 °C ainsi qu'un bloc central comprenant au moins des unités pendantes furfuryliques et ayant une température de transition vitreuse Tg comprise entre -93,4 °C et -80,4 °C.

Le document WO 2011/112447 A2 décrit un procédé de fabrication d'un ensemble d'affichage, par exemple dans une horloge, en utilisant un adhésif thermoréversible réticulable.

Le document US 5,726,391 décrit un procédé d'assemblage et de repositionnement de deux substrats, comme dans les montres numériques, à l'aide d'un adhésif thermoréversible et réticulable à base de Diels-Alder.

### Résumé de l'invention

L'invention a notamment pour objectif de pallier les différents inconvénients des colles connues utilisées jusqu'à présent pour assembler des pièces horlogères.

La présente invention concerne un procédé d'assemblage est de repositionnement d'au moins deux pièces horlogères au moyen d'un adhésif repositionnable à chaud, lesdites pièces horlogères étant maintenues assemblées entre elles lorsque ledit adhésif est à une température T_{A} et pouvant être repositionnées l'une par rapport à l'autre lorsque ledit adhésif est chauffé à une température T_{C}, comprenant les étapes de :
a) préparer une solution d'un adhésif comprenant au moins une formulation se présentant sous la forme d'un mélange de chaines copolymères blocs comprenant au moins un premier bloc polymère présentant une température de transition vitreuse Tg ou une température de fusion Tf comprise entre 40°C et 200°C, et au moins un deuxième bloc polymère comprenant au moins des unités pendantes diènes X et présentant une température de transition vitreuse Tg ou une température de fusion Tf inférieure à T_{DA}, et d'autre part de molécules de couplage comprenant au moins deux groupements terminaux diénophiles Y, lesdites unités X et lesdits groupements Y étant agencés pour pouvoir réagir entre eux et se lier par réaction de Diels-Alder à une température T_{DA} et pour pouvoir se régénérer par réaction de rétro-Diels-Alder à une température T_{RDA},
   où T_{A} < T_{RDA} ≤ T_{C}, la température T_{DA} étant comprise entre 0°C et 100°C, préférentiellement entre 25°C et 70°C, la température T_{RDA} étant comprise entre 50°C et 200°C, préférentiellement entre 80°C et 150°C, T_{DA} étant strictement inférieure à T_{RDA}, et la température T_{C} étant supérieure à la température de transition vitreuse Tg ou à la température de fusion Tf du premier bloc polymère,
b) appliquer la solution dudit adhésif sur les pièces horlogères
c) sécher
d) placer les pièces horlogères à une température supérieure ou égale à la température de transition vitreuse Tg ou à la température de fusion Tf du premier bloc polymère pour repositionner les pièces horlogères
e) refroidir à une température inférieure ou égale à la température de transition vitreuse Tg ou à la température de fusion Tf du premier bloc polymère,
f) placer les pièces horlogères à une température supérieure ou égale à la température T_{DA} et inférieure à T_{DRA} pour relier les chaines copolymères blocs entre elles au moyen des molécules de couplage par réaction de Diels-Alder de sorte que l'adhésif est sous la forme d'un réseau tridimensionnel
g) chauffer lesdites pièces horlogères à la température T_{C} pour régénérer le mélange de chaines copolymères blocs et de molécules de couplage par réaction de rétro-Diels-Alder
h) repositionner les pièces horlogères
i) reproduire les étapes e) à f)
j) éventuellement répéter les étapes g) à i) autant de fois que nécessaire pour repositionner à nouveau les pièces horlogères.

Cette structure de blocs dans laquelle les blocs ont chacun leur température de transition vitreuse ou de fusion propre, permet avantageusement de conférer à l'adhésif deux propriétés : repositionnement/figeage rapide et résistance aux lavages chimiques.

L'ensemble obtenu peut alors être travaillé à chaud pour séparer les pièces et les repositionner et est résistant aux lavages chimiques.

Selon des modes de réalisation particulièrs de la présente invention, le procédé comprend des étapes telles que définies dans les revendications dépendantes de 2 à 13.

### Description détaillée de l'invention

La présente invention concerne l'utilisation d' un adhésif repositionnable agencé pour assembler au moins deux pièces horlogères lorsque ledit adhésif est à une température T_{A} et pour pouvoir repositionner lesdites pièces horlogères l'une par rapport à l'autre lorsque ledit adhésif est chauffé à une température T_{C}.

Les pièces à assembler sont selon la présente invention des pièces horlogères, c'est-à-dire tout élément utilisé dans un mécanisme horloger nécessitant d'être assemblé à un autre élément par collage et de pouvoir être séparé en cas par exemple de service après-vente pour être repositionné de manière optimale. Un ensemble de pièces horlogères est par exemple un ensemble palette en rubis/ancre ou spiral/piton ou index/cadran.

L'adhésif comprend au moins une formulation se présentant :
- à la température T_{C} sous la forme d'un mélange de chaines polymères comprenant au moins des unités pendantes diènes X et de molécules de couplage comprenant au moins deux groupements terminaux diénophiles Y, lesdites unités X et lesdits groupements Y étant agencés pour pouvoir réagir entre eux et se lier par réaction de Diels-Alder à une température T_{DA} et pour pouvoir se régénérer par réaction de rétro-Diels-Alder à une température T_{RDA},
- à une température T_{A} sous la forme d'un réseau tridimensionnel dans lequel les chaines polymères sont reliées entre elles par les molécules de couplage par réaction de Diels-Alder,
   où T_{A} < T_{RDA} ≤ T_{C}
   où la température T_{DA} est comprise entre 0°C et 100°C, préférentiellement entre 25°C et 70°C, et la température T_{RDA} est comprise entre 50°C et 200°C, préférentiellement entre 80°C et 150°C, T_{DA} étant strictement inférieure à T_{RDA}.

Les températures T_{DA} de la réaction de Diels-Alder et T_{RDA} de la réaction de rétro-Diels-Alder dépendent des unités X de la chaine polymère et de la molécule de couplage. Ces derniers sont choisis de sorte que la température T_{DA} de la réaction de Diels-Alder est avantageusement comprise entre 0°C et 100°C, et plus préférentiellement entre 25°C et 70°C, et la température T_{RDA} de la réaction de rétro-Diels-Alder est comprise entre 50°C et 200°C, et plus préférentiellement entre 80°C et 150°C.

Selon l'invention, la chaine polymère est un copolymère bloc comprenant au moins un premier bloc polymère présentant une température de transition vitreuse Tg ou une température de fusion Tf comprise entre 40°C et 200°C, de préférence entre 60°C et 150°C, et au moins un deuxième bloc polymère comprenant au moins des unités pendantes diènes X et présentant une température de transition vitreuse Tg ou une température de fusion Tf inférieure à T_{DA}, et de préférence comprise entre -50°C et 60°C, et plus préférentiellement entre -50°C et 20°C.

Selon un mode de réalisation préféré de l'invention, la chaine polymère est un copolymère bloc comprenant à chacune de ses extrémités un bloc polymère présentant une température de transition vitreuse Tg ou une température de fusion Tf comprise entre 40°C et 200°C, de préférence entre 60°C et 150°C, et un bloc polymère central comprenant au moins des unités pendantes diènes X et présentant une température de transition vitreuse Tg ou une température de fusion Tf inférieure à T_{DA}, et de préférence comprise entre -50°C et 60°C, et plus préférentiellement entre -50°C et 20°C.

Ainsi, selon l'invention, la chaine polymère comprend au moins un bloc polymère « dur » constitué par le bloc polymère présentant une température de transition vitreuse Tg ou une température de fusion Tf comprise entre 40°C et 200°C, de préférence entre 60°C et 150°C, et un bloc polymère « mou » constitué par le bloc polymère comprenant au moins des unités pendantes diènes X et présentant une température de transition vitreuse Tg ou une température de fusion Tf inférieure à T_{DA}, et de préférence comprise entre -50°C et 60°C, et plus préférentiellement entre -50°C et 20°C.

Cette structure de bloc mou / bloc dur dans laquelle les blocs polymères ont chacun leur température de transition vitreuse ou de fusion propre, permet avantageusement de conférer à l'adhésif deux propriétés : repositionnement/figeage rapide et résistance aux lavages chimiques.

En effet, le bloc dur (de plus haute Tg ou Tf) permet d'assurer la solidification de l'adhésif à température ambiante (≤25°C) et un repositionnement fin et rapide des pièces à une température supérieure à la température de transition vitreuse Tg ou de fusion Tf du bloc dur. Le bloc dur joue le même rôle qu'un adhésif thermofusible.

Les blocs mous (de plus basse Tg ou Tf) couplés par les molécules de couplage permettent de créer un réseau tridimensionnel thermoréversible entre les copolymères blocs et d'assurer ainsi une résistance aux lavages chimiques, tels que les lavages horlogers. Comme cela sera décrit ci-après, le réseau tridimensionnel est formé en plaçant les pièces, repositionnées et figées par le bloc dur, pendant quelques heures à une température nécessaire pour réaliser la réaction de Diels-Alder entre les blocs mous et les molécules de couplage. La Tg ou Tf faible de ce bloc mou, inférieure à T_{DA} permet d'assurer une grande mobilité des chaines et donc de favoriser le couplage par réaction de Diels Aider.

D'une manière avantageuse, le bloc polymère « dur » présentant une température de transition vitreuse Tg ou une température de fusion Tf comprise entre 40°C et 200°C, de préférence entre 60°C et 150°C, est un homopolymère ou copolymère formé à partir de partir de monomères acryliques, méthacryliques, acrylamides, méthacrylamides styréniques, ou vinyliques. Des exemples de monomères particulièrement appropriés pour obtenir un bloc avec une température de transition vitreuse ou une température de fusion Tf comprise entre 60°C et 150°C sont le terbutylmethacrylate, Isobutyl methacrylate Ethyl methacrylate, Isobornyl acrylate, Isobornyl methacrylate , Phenyl methacrylate, N-Isopropylacrylamide, Isopropyl methacrylate,Methacrylic acid, Methacrylic anhydride, Methacrylonitrile, Methyl acrylate, Methyl methacrylate, Phenyl methacrylate, styrène, 3-Methylstyrene, 4-Methylstyrene, Vinyl alcohol, Vinyl benzoate, Vinyl cyclohexanoate.

Dans le bloc polymère « mou », d'une manière préférée les unités pendantes diènes X sont des unités pendantes qui comprennent au moins une fonction diène X, de préférence terminale, et choisie parmi le groupe comprenant le furane, le cyclopentadiène et l'anthracène.

Ainsi, des exemples de monomères particulièrement appropriés pour former un bloc polymère « mou » comprenant des unités pendantes diènes X sont :

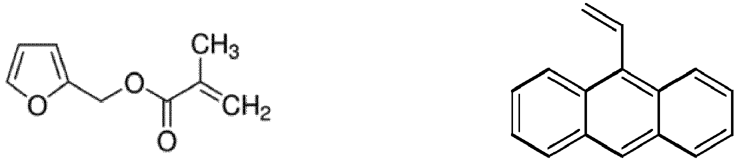

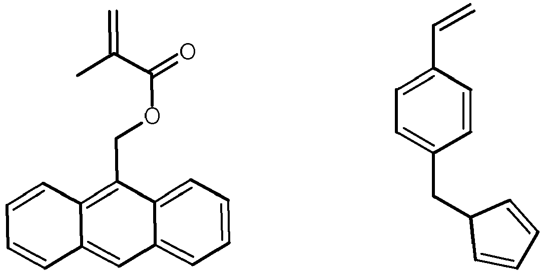

Ces molécules sont disponibles sur le marché ou synthétisable en une étape (synthèse décrite par exemple dans la publication Organic Letters, 4(14), 2365-2368; 2002).

Le bloc polymère « mou » peut avantageusement être un copolymère obtenu à partir de différents monomères permettant d'obtenir les propriétés recherchées.

Ainsi, le bloc polymère « mou » peut comprendre des unités pendantes agencées pour présenter une affinité appropriée avec les pièces à assembler. Ces unités pendantes sont également stables aux cycles de température auquel les pièces à assembler seront soumises.

De préférence, les unités pendantes agencées pour présenter une affinité appropriée avec les pièces à assembler sont choisies parmi le groupe comprenant les thiols, thioéthers, thioesters, sulfures, thioamides, hydroxyles, catéchol, aminés, ammoniums, hétérocycles azotés, tels que imidazole ou pyridine, acides carboxyliques, esters, et anhydrides.

Ainsi, des exemples de monomères particulièrement appropriés pour introduire, dans le bloc polymère « mou » comprenant déjà les unités pendantes X, des unités pendantes agencées pour présenter une affinité appropriée avec les pièces à assembler sont :

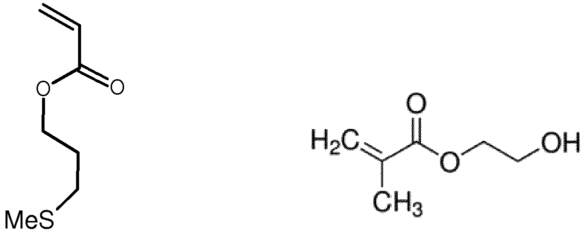

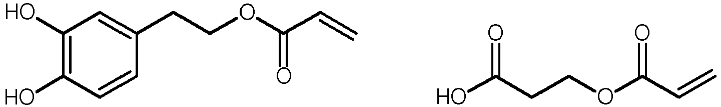

Ces molécules sont disponibles sur le marché.

De même, d'une manière avantageuse le bloc polymère « mou » peut comprendre des unités pendantes agencées pour régler la température de transition vitreuse Tg ou la température de fusion Tf dudit bloc polymère « mou » en dessous de la T_{DA}.

De préférence, les unités pendantes agencées pour régler la température de transition vitreuse Tg ou la température de fusion Tf du bloc polymère « mou » sont choisies parmi le groupe comprenant les chaines alkyles éventuellement fonctionnalisées et les dérivés du phényle. Ainsi des exemples de monomères appropriés et disponibles commercialement pour former les unités pendantes agencées pour régler la Tg ou Tf du polymère sont les esters méthacryliques ou acryliques, les dérivés du styrène. On peut citer par exemple : le butyl methacrylate (homobutylmethacrylate = 20°C), le Cyclohexyl acrylate (homocyclohexylacrylate = 19°C), tert-Butyl methacrylate (Tg homotert-Butyl methacrylate = 118°C), le Dodecyl methacrylate (Tg homo Dodecyl methacrylate = -65°C), le 2-Ethoxyethyl acrylate (Tg homo 2-Ethoxyethyl acrylate = -50°C), le Ethyl acrylate (Tg homo Ethyl acrylate = -24°C), l'Hexyl acrylate (Tg Hexyl acrylate = 59°C), le styrene (Tg homopolymère de styrène = 100°C).

On comprend aisément également que certaines des unités pendantes agencées pour présenter une affinité appropriée avec les pièces à assembler peuvent également servir à ajuster la Tg ou la Tf du bloc polymère « mou ».

D'une manière avantageuse, le bloc copolymère « mou » contient entre 1 et 50%, préférentiellement entre 1 et 30%, d'unités pendantes X, entre 1 et 50%, préférentiellement entre 1 et 30%, d'unités pendantes agencées pour présenter une affinité appropriée avec les pièces à assembler, et entre 1 et 90%, préférentiellement entre 20 et 70%, d'unités pendantes agencées pour régler la température de transition vitreuse Tg ou la température de fusion Tf du bloc copolymère « mou ».

Les techniques de copolymérisation en bloc sont bien connues de l'homme du métier et ne nécessitent pas de description détaillée.

Préférentiellement, deux voies de synthèse peuvent être utilisées pour obtenir le copolymère bloc. Une première voie possible est la synthèse séquentielle des blocs. Cette voie peut par exemple comprendre les étapes suivantes :
- polymérisation anionique de styrène pour obtenir le bloc polymère dur
- fonctionnalisation en bout de chaine du styrène pour obtenir un macro-amorceur
- copolymérisation radicalaire par transfert d'atomes (ATRP) de furfuryl methacrylate / butylmethacrylate / hydroxyethylmethacrylate pour obtenir un bloc polymère mou à partir du macro-amorceur (= polystyrène fonctionnel)
ou encore :
- polymérisation radicalaire contrôlée de furfuryl methacrylate / butylmethacrylate / hydroxyethylmethacrylate à partir d'un initiateur bifonctionnel (par exemple PhCOCHCl₂) pour obtenir le bloc mou bifonctionnel
- croissance des blocs styrène à partir du macroamorceur (=bloc mou bifonctionnel) par polymérisation radicalaire contrôlée

Une deuxième voie possible est la synthèse par « Click chemistry » entre les 2 blocs dur et mou. Cette voie peut par exemple comprendre les étapes suivantes :
- synthèse par ATRP d'un copolymère de furfurylmethacrylate / hydroxyethylmethacrylate /butylmethacrylate fonctionnel alcyne
- couplage en click chemistry du copolymère de furfurylmethacrylate / hydroxyethylmethacrylate /butylmethacrylate fonctionnel alcyne avec le polystyrène fonctionnel azide représenté ci-dessous et disponible commercialement :

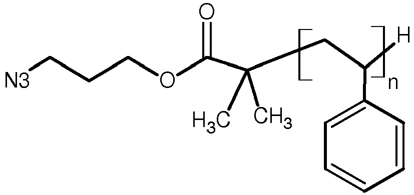

Un exemple de copolymère bloc comprenant un bloc dur et un bloc mou est représenté ci-dessous :

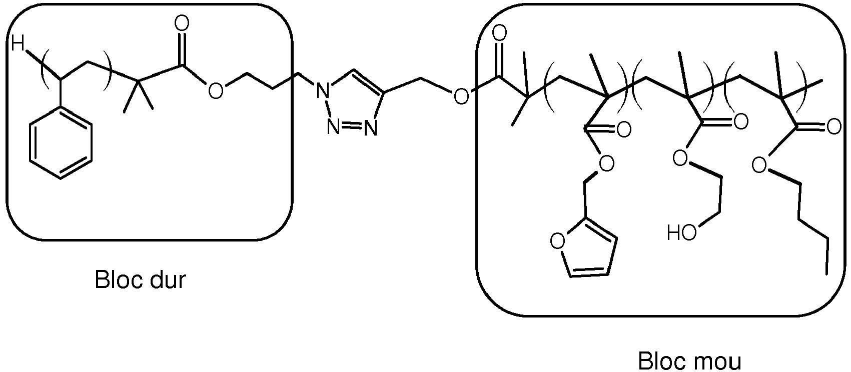

En ce qui concerne les molécules de couplage, leurs groupements diénophiles Y sont de préférence dérivés de composés choisis parmi le groupe comprenant le maléimide et l'anhydride maléique.

De préférence, Y est dérivé du maléimide.

Ainsi, la molécule de couplage peut avantageusement présenter une structure de formule (I) ci-dessous : 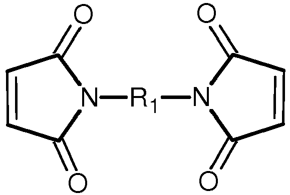 où R1 est une chaine alkyle, préférentiellement une chaine (CH₂)ₙ avec 1<n<35, substituée ou non par au moins un groupe hydroxyle ou par un groupe N-methylmaléimide, une chaine aryle, préférentiellement un phényle, ou une chaine PDMS (polydiméthylsiloxane) ou une structure de la forme 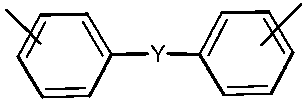 avec Y = -O-, -S-, -CH₂-, - C(CH₃)₂- ou une chaine PDMS ou une chaine PEG (polyéthylène glycol).

Des exemples de molécules de couplage particulièrement appropriées et disponibles sur le marché sont :

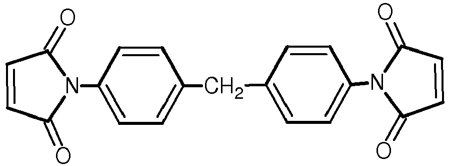

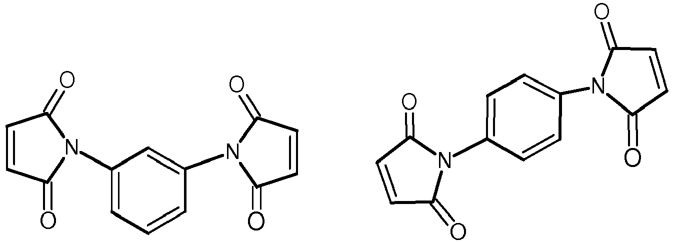

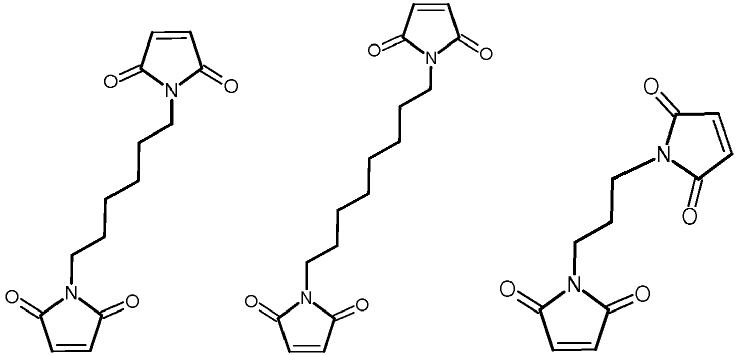

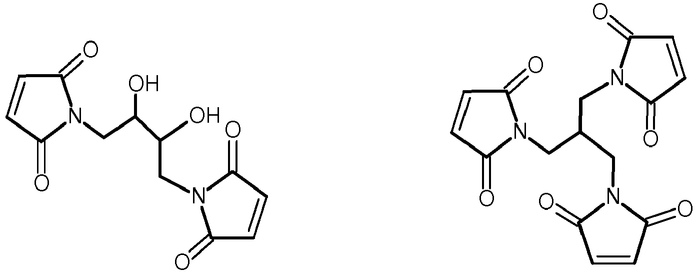

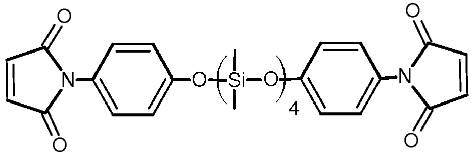

Dans la formulation se présentant sous la forme d'un mélange de chaines copolymères blocs comprenant au moins des unités pendantes diènes X et de molécules de couplage comprenant au moins deux groupements terminaux diénophiles Y, la quantité de molécules de couplage est telle que le ratio en nombre de molécules de couplage sur le nombre de fonctions diènes X pendantes est compris entre 0.5:2 et 1.2:2, et de préférence est égal à 1 :2.

Selon la présente invention les deux pièces horlogères sont assemblées et peuvent être repositionnées selon un procédé d'assemblage et de repositionnement comprenant les étapes de :
a) préparer dans un solvant (tel que alcool isopropylique, éthanol, Méthyl tert-butyl éther, tetrahydrofurane)une solution d'un adhésif comprenant au moins une formulation se présentant sous la forme d'un mélange de chaines copolymères blocs comprenant au moins un premier bloc polymère présentant une température de transition vitreuse Tg ou une température de fusion Tf comprise entre 40°C et 200°C, et au moins un deuxième bloc polymère comprenant au moins des unités pendantes diènes X et présentant une température de transition vitreuse Tg ou une température de fusion Tf inférieure à T_{DA} et de molécules de couplage comprenant au moins deux groupements terminaux diénophiles Y, lesdites unités X et lesdits groupements Y étant agencés pour pouvoir réagir entre eux et se lier par réaction de Diels-Alder à une température T_{DA} et pour pouvoir se régénérer par réaction de rétro-Diels-Alder à une température T_{RDA},
   où T_{A} < T_{RDA} ≤ T_{C}, la température T_{DA} étant comprise entre 0°C et 100°C, préférentiellement entre 25°C et 70°C, la température T_{RDA} étant comprise entre 50°C et 200°C, préférentiellement entre 80°C et 150°C, T_{DA} étant strictement inférieure à T_{RDA}, et la température T_{C} étant supérieure à la température de transition vitreuse Tg ou à la température de fusion Tf du premier bloc polymère,
b) appliquer la solution dudit adhésif sur les pièces horlogères à assembler
c) sécher, par exemple sous vide pour éliminer le solvant
d) placer les pièces horlogères à une température supérieure ou égale à la température de transition vitreuse Tg ou à la température de fusion Tf du premier bloc polymère pour repositionner finement les pièces horlogères
e) refroidir à une température inférieure ou égale à la température de transition vitreuse Tg ou à la température de fusion Tf du premier bloc polymère afin de figer l'ensemble des pièces horlogères encollé
f) placer les pièces horlogères, par exemple par mise à l'étuve, pendant quelques heures, à une température supérieure ou égale à la température T_{DA} et inférieure à T_{DRA} pour relier les chaines copolymères blocs entre elles au moyen des molécules de couplage par réaction de Diels-Alder de sorte que l'adhésif est sous la forme d'un réseau tridimensionnel
g) s'il est nécessaire de repositionner les pièces horlogères, chauffer lesdites pièces horlogères à la température T_{C} pour régénérer le mélange de chaines copolymères blocs et de molécules de couplage par réaction de rétro-Diels-Alder
h) repositionner les pièces horlogères
i) reproduire les étapes e) à f)
j) éventuellement répéter les étapes g) à i) autant de fois que nécessaire pour repositionner à nouveau les pièces horlogères.

Ainsi, à température ambiante, dans les conditions normales d'utilisation des pièces, ces dernières sont collées au moyen de l'adhésif résistant aux lavages chimiques, grâce au réseau tridimensionnel constitué par les chaines copolymères blocs. A température plus élevée, soit au moins à la température T_{RDA} de réaction de rétro-Diels-Alder, les ponts formés entre les chaines copolymères blocs par les molécules de couplage se brisent pour casser le réseau tridimensionnel. La viscosité de l'adhésif diminue de sorte qu'il est alors possible de repositionner minutieusement les pièces. L'ensemble est refroidi et placé à une température permettant de déclencher la réaction de Diels-Alder entre les chaines copolymères blocs et les molécules de couplage afin de reformer le réseau tridimensionnel et figer les pièces dans leur nouvelle position.

L'avantage d'une structure bloc est que les pièces peuvent être repositionnées à chaud et figées rapidement par refroidissement des blocs durs tout en conservant la flexibilité des blocs mous afin qu'ils aient suffisamment de mobilité pour pouvoir réagir par réaction de Diels-Alder avec les molécules de couplage à une température inférieure à la température de transition vitreuse ou à la température de fusion Tf des blocs durs.

### Exemple de synthèse de chaines copolymères blocs :

On synthétise la chaîne polymère sous la forme d'un copolymère bloc A-B-A par le mode opératoire suivant :
dans un tube de Schlenk contenant du toluène (6mL) préalablement dégazé à l'azote, sont ajoutés le furfuryl méthacrylate (3mL, 19.2 mmol), l'hydroxyéthyl méthacrylate (1.6mL, 12.8mmol), le dodécylméthacrylate (5.6mL, 19.2mmol), le catalyseur Ru(Ind)Cl/PPh3)2 (10mg), une solution de l'initiateur bifonctionnel CHCl2(COPh) (0.32mL d'une solution à 400mmol/L dans le toluène) et une solution de n-Bu3N dans le toluène (0.64mL d'une solution à 0.27mmol/L). Le milieu réactionnel est barboté 5 min à l'azote puis agité et chauffé à 80°C pendant 24h. Le milieu réactionnel est précipité dans l'acétone. Le précipité est isolé par centrifugation, solubilisé dans le toluène puis coagulé dans le méthanol. Le polymère est séché sous vide puis utilisé comme macroinitiateur pour l'étape suivante. Pour cela, une solution du polymère macroinitiateur dans le toluène (2mM) est préparée. Puis dans un tube de Schlenk sont ajoutés : la solution 2M de polymère macroinititaeur (7.1mL, 0.0142 mmol), le catalyseur Ru(Ind)Cl/PPh3)2 (10mg), le méthylméthacrylate (0.76 mL, 7.1mmol). Le mélange est chauffé et agité pendant 24h à 80°C. Le milieu réactionnel est précipité dans l'acétone. Le précipité est isolé par centrifugation, solubilisé dans le toluène puis coagulé dans le méthanol. Le polymère est séché sous vide puis utilisé comme macroinitiateur pour l'étape suivante.

On obtient le copolymère bloc suivant :

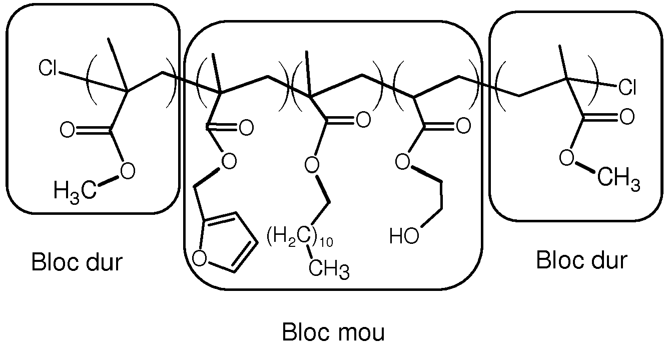

Pour former l'adhésif repositionnable à chaud, la chaine de copolymères blocs précédemment décrite est mise en solution dans du toluène puis mélangée à l'agent de couplage 4,4'-(Methylenedi-p-phenylene)dimaleimide (134mg, 0.375 mmol).

Cette solution est ensuite déposée sur des pièces à assembler selon le protocole décrit précédemment.

## Revendications

1. Procédé d'assemblage et de repositionnement d'au moins deux pièces horlogères au moyen d'un adhésif repositionnable à chaud, lesdites pièces horlogères étant maintenues assemblées entre elles lorsque ledit adhésif est à une température T_{A} et pouvant être repositionnées l'une par rapport à l'autre lorsque ledit adhésif est chauffé à une température T_{C}, comprenant les étapes de :
a) préparer une solution d'un adhésif comprenant au moins une formulation se présentant sous la forme d'un mélange d'une part de chaines copolymères blocs comprenant au moins un premier bloc polymère présentant une température de transition vitreuse Tg ou une température de fusion Tf comprise entre 40°C et 200°C, et au moins un deuxième bloc polymère comprenant au moins des unités pendantes diènes X et présentant une température de transition vitreuse Tg ou une température de fusion Tf inférieure à une température T_{DA}, et d'autre part de molécules de couplage comprenant au moins deux groupements terminaux diénophiles Y, lesdites unités X et lesdits groupements Y étant agencés pour pouvoir réagir entre eux et se lier par réaction de Diels-Alder à la température T_{DA} et pour pouvoir se régénérer par réaction de rétro-Diels-Alder à une température T_{RDA},
où T_{A} < T_{RDA} ≤ T_{C}, la température T_{DA} étant comprise entre 0°C et 100°C, préférentiellement entre 25°C et 70°C, la température T_{RDA} étant comprise entre 50°C et 200°C, préférentiellement entre 80°C et 150°C, T_{DA} étant strictement inférieure à T_{RDA}, et la température T_{C} étant supérieure à la température de transition vitreuse Tg ou à la température de fusion Tf du premier bloc polymère,
b) appliquer la solution dudit adhésif sur les pièces horlogères à assembler
c) sécher
d) placer les pièces horlogères à une température supérieure ou égale à la température de transition vitreuse Tg ou à la température de fusion Tf du premier bloc polymère pour repositionner les pièces horlogères
e) refroidir à une température inférieure ou égale à la température de transition vitreuse Tg ou à la température de fusion Tf du premier bloc polymère,
f) placer les pièces horlogères à une température supérieure ou égale à la température T_{DA} et inférieure à T_{DRA} pour relier les chaines copolymères blocs entre elles au moyen des molécules de couplage par réaction de Diels-Alder de sorte que l'adhésif est sous la forme d'un réseau tridimensionnel
g) chauffer lesdites pièces horlogères à la température Tc pour régénérer le mélange de chaines copolymères blocs et de molécules de couplage par réaction de rétro-Diels-Alder
h) repositionner les pièces horlogères
i) reproduire les étapes e) à f)
j) éventuellement répéter les étapes g) à i) autant de fois que nécessaire pour repositionner à nouveau les pièces horlogères.

2. Procédé selon la revendication 1, **caractérisé en ce que** le premier bloc polymère présente une température de transition vitreuse Tg ou une température de fusion Tf comprise entre 60°C et 150°C.

3. Procédé selon l'une des revendications 1 et 2, **caractérisé en ce que** le deuxième bloc polymère présente une température de transition vitreuse Tg ou une température de fusion Tf comprise entre -50°C et 60°C.

4. Procédé selon la revendication 1, **caractérisé en ce que** la chaine polymère est un copolymère bloc comprenant à chacune de ses extrémités un bloc polymère présentant une température de transition vitreuse Tg ou une température de fusion Tf comprise entre 40°C et 200°C, et un bloc polymère central comprenant au moins des unités pendantes diènes X et présentant une température de transition vitreuse Tg ou une température de fusion Tf inférieure à T_{DA}.

5. Procédé selon la revendication 4, **caractérisé en ce que** le bloc polymère aux extrémités présente une température de transition vitreuse Tg ou une température de fusion Tf comprise entre 60°C et 150°C.

6. Procédé selon la revendication 4 ou 5, **caractérisé en ce que** le bloc polymère central présente une température de transition vitreuse Tg ou une température de fusion Tf comprise entre -50°C et 60°C.

7. Procédé selon l'une des revendications précédentes, **caractérisé en ce que** le bloc polymère présentant une température de transition vitreuse Tg ou une température de fusion Tf comprise entre 40°C et 200°C est choisi parmi le groupe comprenant le poly(terbutyl methacrylate), le poly(4-tert-Butylstyrene), le poly(cyclohexyl methacrylate), le polystyrene, et le poly(méthacrylate de méthyle).

8. Procédé selon l'une des revendications précédentes, **caractérisé en ce que** le deuxième bloc polymère comprend des unités pendantes agencées pour présenter une affinité appropriée avec les pièces horlogères à assembler.

9. Procédé selon l'une des revendications précédentes, **caractérisé en ce que** le deuxième bloc polymère comprend des unités pendantes agencées pour régler la température de transition vitreuse Tg ou la température de fusion Tf dudit deuxième bloc polymère.

10. Procédé selon l'une des revendications précédentes, **caractérisé en ce que** les unités pendantes diènes X sont choisies parmi le groupe comprenant le furane, le cyclopentadiène et l'anthracène.

11. Procédé selon la revendication 8, **caractérisé en ce que** les unités pendantes agencées pour présenter une affinité appropriée avec les pièces horlogères à assembler sont choisies parmi le groupe comprenant les thiols, thioéthers, thioesters, sulfures, thioamides, hydroxyles, catéchol, aminés, ammoniums, hétérocycles azotés, acides carboxyliques, esters, et anhydrides.

12. Procédé selon la revendication 9, **caractérisé en ce que** les unités pendantes agencées pour régler la température de transition vitreuse Tg ou la température de fusion Tf du deuxième bloc polymère sont choisies parmi le groupe comprenant les chaines alkyles éventuellement fonctionnalisées et les dérivés du phényle.

13. Procédé selon l'une des revendications précédentes, **caractérisé en ce que** les groupements diénophiles Y sont dérivés de composés choisis parmi le groupe comprenant le maléimide et l'anhydride maléique.

## Patentansprüche

1. Verfahren zum Zusammenbau und Repositionieren von mindestens zwei Uhrenteilen mittels eines heiß repositionierbaren Klebstoffs, wobei die Uhrenteile zusammengebaut gehalten werden, wenn der Klebstoff eine Temperatur T_{A} besitzt, und relativ zueinander repositionierbar sind, wenn der Klebstoff auf eine Temperatur T erwärmt ist, umfassend die folgenden Schritte:
a) Herstellen einer Klebstofflösung, die mindestens eine Formulierung besitzt, die vorliegt in Form eines Gemisches einerseits aus Blockcopolymer-Ketten, umfassend mindestens einen Polymerblock mit einer Glasübergangstemperatur Tg oder einer Schmelztemperatur Tf im Bereich von 40 °C bis 200 °C, und mindestens einen zweiten Polymerblock mit mindestens angehängten Dien-Einheiten X und einer Glasübergangstemperatur Tg oder einer Schmelztemperatur Tf kleiner als eine Temperatur T_{DA}, und andererseits aus Kopplungsmolekülen, umfassend mindestens zwei dienophile Endgruppen Y, wobei die Einheiten X und die Gruppen Y so beschaffen sind, dass sie miteinander reagieren können und durch eine Diels-Alder-Reaktion bei der Temperatur T_{DA} verbindbar sind und durch eine Retro-Diels-Alder-Reaktion bei einer Temperatur T_{RDA} regenerierbar sind,
wobei T_{A} < T_{RDA} ≤ T_{C}, wobei die Temperatur T_{DA} im Bereich von 0 °C bis 100 °C, vorzugsweise im Bereich von 25 °C bis 70 °C, liegt, die Temperatur T_{RDA} im Bereich von 50 °C bis 200 °C, vorzugsweise im Bereich von 80 °C bis 150 °C, liegt, wobei T_{DA} deutlich niedriger als T_{RDA} ist und wobei die Temperatur Tc höher als die Glasübergangstemperatur Tg oder die Schmelztemperatur Tf des ersten Polymerblocks ist,
b) Aufbringen der Klebstofflösung auf die zusammenzubauenden Uhrenteile,
c) Trocknen,
d) Bringen der Uhrenteile auf eine Temperatur höher oder gleich der Glasübergangstemperatur Tg oder der Schmelztemperatur Tf des ersten Polymerblocks, um die Uhrenteile zu repositionieren,
e) Abkühlen auf eine Temperatur niedriger oder gleich der Glasübergangstemperatur Tg oder der Schmelztemperatur Tf des ersten Polymerblocks,
f) Bringen der Uhrenteile auf eine Temperatur höher oder gleich der Temperatur T_{DA} und niedriger als T_{RDA}, um die Blockcopolymer-Ketten mittels der Kopplungsmoleküle durch eine Diels-Alder-Reaktion miteinander zu verbinden, so dass der Klebstoff die Form eines dreidimensionalen Gitters aufweist,
g) Erwärmen der Uhrenteile auf die Temperatur Tc, um das Gemisch aus den Blockcopolymer-Ketten und den Kopplungsmolekülen durch eine Retro-Diels-Alder-Reaktion zu regenerieren,
h) Repositionieren der Uhrenteile
i) Wiederholen der Schritte e) bis f),
j) eventuell Wiederholen der Schritte g) bis i) so oft wie notwendig, um die Uhrenteile erneut zu positionieren.

2. Verfahren nach Anspruch 1, **dadurch gekennzeichnet, dass** der erste Polymerblock eine Glasübergangstemperatur Tg oder eine Schmelztemperatur Tf im Bereich von 60 °C bis 150 °C aufweist.

3. Verfahren nach einem der Ansprüche 1 und 2, **dadurch gekennzeichnet, dass** der zweite Polymerblock eine Glasübergangstemperatur Tg oder eine Schmelztemperatur Tf im Bereich von -50 °C bis 60 °C aufweist.

4. Verfahren nach Anspruch 1, **dadurch gekennzeichnet, dass** die Polymerkette ein Blockcopolymer ist, umfassend an jedem seiner Enden einen Polymerblock, der eine Glasübergangstemperatur Tg oder eine Schmelztemperatur Tf im Bereich von 40 °C bis 200 °C aufweist, und einen mittleren Polymerblock, der mindestens angehängte Dien-Einheiten X aufweist und eine Glasübergangstemperatur Tg oder eine Schmelztemperatur Tf kleiner als T_{DA} aufweist.

5. Verfahren nach Anspruch 4, **dadurch gekennzeichnet, dass** der Polymerblock an den Enden eine Glasübergangstemperatur Tg oder eine Schmelztemperatur Tf im Bereich von 60 °C bis 150 °C aufweist.

6. Verfahren nach Anspruch 4 oder 5, **dadurch gekennzeichnet, dass** der mittlere Polymerblock eine Glasübergangstemperatur Tg oder eine Schmelztemperatur Tf im Bereich von -50 °C bis 60 °C aufweist.

7. Verfahren nach einem der vorhergehenden Ansprüche, **dadurch gekennzeichnet, dass** der Polymerblock, der eine Glasübergangstemperatur Tg oder eine Schmelztemperatur Tf im Bereich von 40 °C bis 200 °C aufweist, aus der Gruppe ausgewählt ist, die Poly(terbutyl-Methacrylat), Poly(4-tert-Butylstyrol), Poly(Cyclohexyl-Methacrylat), Polystyrol und Poly(Methyl-Methacrylat) umfasst.

8. Verfahren nach einem der vorhergehenden Ansprüche, **dadurch gekennzeichnet, dass** der zweite Polymerblock angehängte Einheiten enthält, die so beschaffen sind, dass sie eine geeignete Affinität zu den zusammenzubauenden Uhrenteilen aufweisen.

9. Verfahren nach einem der vorhergehenden Ansprüche, **dadurch gekennzeichnet, dass** der zweite Polymerblock angehängte Einheiten enthält, die so beschaffen sind, dass sie die Glasübergangstemperatur Tg oder die Schmelztemperatur Tf des zweiten Polymerblocks regeln.

10. Verfahren nach einem der vorhergehenden Ansprüche, **dadurch gekennzeichnet, dass** die angehängten Dien-Einheiten X aus der Gruppe ausgewählt sind, die Furan, Cyclopentadien und Anthrazen umfasst.

11. Verfahren nach Anspruch 8, **dadurch gekennzeichnet, dass** die angehängten Einheiten, die so beschaffen sind, dass sie eine geeignete Affinität zu den zusammenzufügenden Uhrenteilen aufweisen, aus der Gruppe ausgewählt sind, die Thiole, Thioethere, Thioester, Sulfide, Thioamide, Hydroxyle, Brenzcatechin, Amine, Ammonium, stickstoffhaltige Heterozyklen, Carbonsäuren, Ester und Anhydride umfasst.

12. Verfahren Anspruch 9, **dadurch gekennzeichnet, dass** die angehängten Einheiten, die dafür ausgelegt sind, die Glasübergangstemperatur Tg oder die Schmelztemperatur Tf des zweiten Polymerblocks zu regeln, aus der Gruppe gewählt sind, die ggf. funktionalisierte Alkylketten und Phenylderivate umfasst.

13. Verfahren nach einem der vorhergehenden Ansprüche, **dadurch gekennzeichnet, dass** die dienophilen Gruppen Y Derivate von Zusammensetzungen sind, die aus der Gruppe ausgewählt sind, die Maleimide und Maleinanhydride umfasst.

## Claims

1. Process for assembling and repositioning at least two timepieces by means of a repositionable hot melt adhesive, wherein said timepieces are held together in assembled position when said adhesive is at a temperature T_{A} and can be repositioned in relation to one another when said adhesive is heated to a temperature Tc, comprising the steps of:
a) preparing a solution of an adhesive comprising at least one formulation having the form of a mixture, on the one hand, of block copolymer chains comprising at least a first polymer block having a glass transition temperature Tg or a melting temperature Tf ranging between 40°C and 200°C, and at least a second polymer block comprising at least pendant diene units X and having a glass transition temperature Tg or a melting temperature Tf lower than a temperature T_{DA}, and, on the other hand, of coupling molecules comprising at least two dienophile end groups Y, wherein said X units and said Y groups are arranged to be able to react with one another and to bond together by means of the Diels-Alder reaction at the temperature T_{DA} and to be able to regenerate by means of the retro-Diels-Alder reaction at a temperature T_{RDA},
where T_{A} < T_{RDA} ≤ T_{C}, wherein temperature T_{DA} ranges between 0°C and 100°C, preferably between 25°C and 70°C, and temperature T_{RDA} ranges between 50°C and 200°C, preferably between 80°C and 150°C, and T_{DA} is strictly lower than T_{RDA}, and temperature T_{C} is higher than the glass transition temperature Tg or the melting temperature Tf of the first polymer block,
b) applying the solution of said adhesive to the timepieces to be assembled
c) drying
d) placing the timepieces at a temperature higher than or equal to the glass transition temperature Tg or the melting temperature Tf of the first polymer block to reposition the timepieces
e) cooling to a temperature lower than or equal to the glass transition temperature Tg or the melting temperature Tf of the first polymer block,
f) placing the timepieces at a temperature higher than or equal to temperature T_{DA} and lower than T_{RDA} to link the block copolymer chains to one another by means of the coupling molecules by the Diels-Alder reaction so that the adhesive is in the form of a three-dimensional network
g) heating said timepieces to temperature T_{C} to regenerate the mixture of block copolymer chains and of coupling molecules by means of the retro-Diels-Alder reaction
h) repositioning the timepieces
i) duplicating steps e) to f)
j) if necessary, repeating steps g) to i) as many times as required to reposition the timepieces again.

2. Process according to claim 1, **characterised in that** the first polymer block has a glass transition temperature Tg or a melting temperature Tf ranging between 60°C and 150°C.

3. Process according to either claim 1 or claim 2, **characterised in that** the second polymer block has a glass transition temperature Tg or a melting temperature Tf ranging between -50°C and 60°C.

4. Process according to claim 1, **characterised in that** the polymer chain is a block copolymer comprising at each of its ends a polymer block having a glass transition temperature Tg or a melting temperature Tf ranging between 40°C and 200°C, and a central polymer block comprising at least pendant diene units X and having a glass transition temperature Tg or a melting temperature Tf lower than T_{DA}.

5. Process according to claim 4, **characterised in that** the polymer block which is at the ends has a glass transition temperature Tg or a melting temperature Tf ranging between 60°C and 150°C.

6. Process according to claim 4 or 5, **characterised in that** the central polymer block has a glass transition temperature Tg or a melting temperature Tf ranging between -50°C and 60°C.

7. Process according to one of the preceding claims, **characterised in that** the polymer block having a glass transition temperature Tg or a melting temperature Tf ranging between 40°C and 200°C is selected from the group consisting of poly(tert-butyl methacrylate), poly(4-tert-butyl styrene), poly(cyclohexyl methacrylate), polystyrene and poly(methyl methacrylate).

8. Process according to one of the preceding claims, **characterised in that** the second polymer block comprises pendant units arranged to have an appropriate affinity with the timepieces to be assembled.

9. Process according to one of the preceding claims, **characterised in that** the second polymer block comprises pendant units arranged to adjust the glass transition temperature Tg or melting temperature Tf of said second polymer block.

10. Process according to one of the preceding claims, **characterised in that** the pendant diene units X are selected from the group consisting of furan, cyclopentadiene and anthracene.

11. Process according to claim 8, **characterised in that** the pendant units arranged to have an appropriate affinity with the timepieces to be assembled are selected from the group consisting of thiols, thioethers, thioesters, sulphides, thioamides, hydroxyls, catechol, amines, ammoniums, nitrogenated heterocycles, carboxylic acids, esters and anhydrides.

12. Process according to claim 9, **characterised in that** the pendant units arranged to adjust the glass transition temperature Tg or melting temperature Tf of the second polymer block are selected from the group consisting of possibly functionalised alkyl chains and phenyl derivatives.

13. Process according to one of the preceding claims, **characterised in that** the dienophile groups Y are derivatives of compounds selected from the group consisting of maleimide and maleic anhydride.
